# FASCICULE DE BREVET EUROPEEN

(11) **EP 1 360 541 B1**
(45) Date de publication et mention de la délivrance du brevet: **10.01.2007**
(21) Numéro de dépôt: 02704844.6
(22) Date de dépôt: 15.02.2002
(51) Int. Cl.: G02C 5/00, G02C 5/14

(54) **MONTURE DE LUNETTES RETRACTILES A ARTICULATIONS ENDOGENES**
EINZIEHBARE BRILLENFASSUNG MIT ENDOGENEN SCHARNIEREN
FRAME FOR RETRACTABLE SPECTACLES WITH ENDOGENOUS ARTICULATIONS

(30) Priorité: 16.02.2001 FR 0102127
(43) Date de publication de la demande: 12.11.2003
(73) Titulaire: Tredoulat, René, 78110 Le Vesinet (FR)
(72) Inventeur: Trédoulat, René Antoine Julien, 78110 Le Vésinet (FR); Fratti, Fabio, 20148 Milano (IT)
(74) Mandataire: Intes, Didier Gérard André
(86) Numéro de dépôt international: PCT/FR2002/000584
(87) Numéro de publication internationale: WO 2002/067040

(56) Documents cités:
- EP-A- 0 354 051
- FR-A- 2 735 878
- US-A- 2 753 762
- US-A- 4 776 686

## Description

La présente invention concerne une monture de lunettes comportant :
- deux branches ayant chacune un corps de branche compris entre une première portion d'extrémité de branche et une seconde portion d'extrémité de branche,
- un corps de monture ayant des moyens formant logement dans lesquels chacune des premières portions d'extrémité de branche est logée et dans lesquels chacun des corps de branche est susceptible d'être inséré par respectivement une première et une deuxième ouverture desdits moyens formant logement, pour adopter une position de repos, lesdits corps de branche étant susceptibles d'être extraits de ces moyens formant logement pour adopter une position d'utilisation, lesdits moyens formant logement comportant une première et une deuxième portion d'extrémité situées respectivement au voisinage de ladite première et ladite deuxième ouverture et,
- des moyens pour retenir chacune desdites premières portions d'extrémité de branche dans ladite position d'utilisation, dans respectivement ladite première et ladite deuxième portion d'extrémité desdits moyens formant logement, lesdites premières portions d'extrémité de branche comportant chacune un talon de retenue.

Le brevet FR 2 735 878, divulgue une monture de lunettes de ce type à branches rétractiles, comportant des moyens formant logement qui comportent au voisinage de chaque portion d'extrémité, des organes d'articulation qui présentent chacun un canal intérieur pouvant, selon sa position, être aligné ou non avec les moyens formant logement. Chaque canal est susceptible d'être placé dans une première position dans laquelle, la branche rétractile correspondante peut être insérée dans les moyens formant logement en traversant le canal. Dans une deuxième position du canal, chaque branche est disposée en position d'utilisation hors des moyens formant logement. Chaque branche est en outre munie d'un talon qui permet la retenue de la branche à l'aide d'un appui contre une surface de l'organe d'articulation et chaque organe d'articulation comporte en outre, un organe élastique susceptible de faire saillie dans le canal pour coopérer avec une zone concave formée sur la branche, pour caler cette dernière dans sa position d'extraction.

Le document EP-A-354051 divulgue des lunette avec des branches rétractables.

Ainsi, les organes d'articulation sont relativement complexes, puisqu'ils sont solidaires du corps de monture tout en étant mobiles par rapport à eux et qu'ils sont composés d'un ensemble de pièces pour permettre le passage des branches à travers eux entre chaque changement de position repos/utilisation, les organes d'articulation n'étant quant à eux pas introduits dans les moyens formant logement.

Les organes d'articulation restent donc visibles, même en position de repos. Pour éviter qu'ils ne soient trop visibles, ce qui nuit à l'esthétique, les organes d'articulation doivent être miniaturisés, ce qui en complique la fabrication et en augmente le coût.

La présente invention a pour but de remédier à ces inconvénients en proposant des montures de lunettes à branches rétractiles, de fabrication plus simple et ayant un nombre de pièces réduit.

Cet objet est atteint grâce au fait que chacune desdites portions d'extrémité desdits moyens formant logement comporte au moins un premier étranglement qui est apte à retenir chaque talon de retenue dans lesdits moyens formant logement et, qu'au voisinage de ladite première portion d'extrémité de branche, chaque corps de branche présente une zone souple, qui présente une souplesse supérieure à la souplesse d'une partie courante dudit corps de branche et qui forme, en position d'utilisation, un coude susceptible d'être écarté pour pénétrer dans les moyens formant logement.

La zone souple comporte, en position d'utilisation, un coude qui remplace les organes d'articulation connus constituant une « articulation endogène ». Ainsi, en position de repos, seule la seconde portion d'extrémité de branche reste visible et dépasse du corps de monture. Elle peut toutefois dépasser faiblement et, si elle est courbée, venir se placer contre les côtés des verres.

La zone souple présente une souplesse suffisante pour que le coude puisse être très facilement déformé par déformation élastique, de préférence seulement dans la direction privilégiée correspondant au mouvement d'ouverture et de fermeture du coude.

Dans cette zone la souplesse est plus grande que dans la partie courante de la branche, ce qui signifie que, pour obtenir une déformation d'amplitude égale, les efforts devant être exercés dans la zone souple sont très largement inférieurs à ceux qu'il faut exercer dans la partie courante de la branche. De ce fait, cette partie courante continue de présenter une tenue suffisante. En particulier, lorsque l'on souhaite insérer la branche dans les moyens formant logement, on déplace d'abord la partie courante de la branche de manière à ouvrir le coude, pour placer cette partie courante dans l'alignement des moyens formant logement, puis on exerce une poussée dans le sens longitudinal de la partie courante de la branche. Du fait de sa grande souplesse, la partie souple n'a pas tendance à opposer d'efforts antagonistes importants à sa rentrée dans les moyens formant logement. La partie courante quant à elle, présente une tenue suffisante pour éviter de se fléchir sous l'action de l'effort longitudinal qui lui est appliqué.

Par ailleurs, la déformation de la zone souple est élastique, ce qui signifie qu'elle est réversible. En effet, dès que cette zone souple est sortie des moyens formant logement, elle retrouve naturellement sa forme de coude.

De plus, la zone souple est suffisamment élastique et flexible pour pouvoir être facilement déformée à répétition, sans se rompre, entre une première position extrême et une deuxième position extrême. La première position, dans laquelle la zone souple revient naturellement lorsqu'elle n'est soumise à aucune contrainte, correspond à une position dans laquelle la zone souple forme le coude, alors que la seconde position, obtenue par ouverture de l'angle définissant le coude au repos, correspond à la position dans laquelle la zone souple peut pénétrer dans les moyens formant logement.

Les moyens formant logement permettent en outre à la zone souple de conserver l'écartement du coude nécessaire pendant toute la durée de la position de repos, en présentant, comme expliqué plus loin, des appuis pour la première portion d'extrémité de branche.

Le premier étranglement est réalisé dans chaque portion d'extrémité des moyens formant logement pour retenir le talon de retenue de la branche lors de l'extraction de cette dernière. Pour ce faire, ledit premier étranglement présente, avantageusement, une dimension réduite dans au moins une première direction. L'homme du métier veillera à orienter cette direction de l'étranglement en fonction de la forme et de la disposition du talon de retenue.

Avantageusement, chacune desdites portions d'extrémité desdits moyens formant logement comporte, en outre, au voisinage de chaque premier étranglement, un deuxième étranglement qui présente une dimension réduite dans au moins une deuxième direction, ladite deuxième direction étant transversale à ladite première direction.

Ce deuxième étranglement permet, d'une part, de garantir une bonne retenue du talon si le premier étranglement est insuffisant et, d'autre part, d'éviter le débattement de la branche en position d'utilisation par contact avec la première portion d'extrémité de branche. En effet, dans cette position, le premier étranglement retient le talon de retenue, tandis que le deuxième étranglement coopère avec la partie de branche située entre le talon et le coude.

Avantageusement, chacune desdites portions d'extrémité desdits moyens formant logement comporte, en outre, plus proche de l'ouverture dont elle est voisine, un troisième étranglement qui présente une dimension réduite dans ladite deuxième direction.

Lorsque le troisième étranglement est associé au deuxième étranglement, la portion d'extrémité de branche qui, en position d'utilisation, reste dans les moyens formant logement, vient s'arc-bouter contre les deuxième et troisième étranglements, ce qui empêche tout débattement de la branche.

Chacune desdites portions d'extrémité desdits moyens formant logement comporte, en outre, avantageusement, un quatrième étranglement qui est analogue au premier étranglement, mais qui est plus proche de l'ouverture.

Considérés conjointement, les quatre étranglements définissent huit points d'appuis pour les branches, qui permettent de faciliter l'introduction des branches dans les moyens formant logement en réalisant un guidage des branches.

Selon un premier mode de réalisation, lesdits moyens formant logement sont formés par un tube unique et chaque étranglement est formé sur ledit tube qui constitue une seule pièce. Ainsi, les branches sont introduites dans le même tube, ce qui permet de diminuer l'épaisseur des moyens formant logement.

Selon un deuxième mode de réalisation, les moyens formant logement comportent un tube et deux manchons insérés dans ledit tube respectivement aux première et deuxième portions d'extrémité desdits moyens formant logement.

Comme décrit plus en détails dans la suite, les conformations des moyens formant logement permettant de retenir les talons de retenue des branches, peuvent être réalisées sur les manchons, en particulier sur des parties de ces derniers masquées par le tube, afin de ne pas être visibles de l'extérieur.

Ainsi, pour chacune desdites portions d'extrémité des moyens formant logement, le premier étranglement est avantageusement formé par une partie du manchon inséré dans la portion d'extrémité considérée.

Pour chaque portion d'extrémité des moyens formant logement, le premier étranglement est avantageusement formé par une différence de sections entre le manchon inséré dans le tube à la portion d'extrémité considérée et le tube, de manière à présenter une surface d'appui pour le talon de retenue. Le talon de retenue de la branche présente quant à lui une section intermédiaire entre les deux sections précitées, de sorte qu'il est susceptible d'être retenu contre la surface d'appui du manchon. Les sections du manchon, du tube et du talon considérées ci-dessus, sont mesurées selon une même direction.

Avantageusement, pour chaque manchon, le premier étranglement est formé à l'extrémité du manchon qui est tournée vers l'intérieur dudit tube.

Ainsi, le talon de retenue de la branche est retenu à l'intérieur du tube contre le manchon, tandis que le restant de la branche peut s'étendre à l'extérieur en position d'utilisation.

Avantageusement, l'extrémité de chaque manchon tournée vers l'intérieur du tube, présente au moins une encoche dans laquelle le talon de retenue de la branche coopérant avec le manchon considéré est susceptible d'être inséré.

Chaque manchon présente une encoche qui est orientée dans le même plan que celui contenant le talon de retenue, de sorte que ce dernier est susceptible de coulisser à l'intérieur de l'encoche lors du changement de position repos/utilisation et vice-versa et ainsi d'y être retenu en rotation par appui contre les côtés de l'encoche. Ainsi, l'encoche empêche la branche considérée de tourner dans les moyens formant logement.

Avantageusement, l'extrémité de chaque manchon située à l'intérieur du tube, présente deux encoches dans l'une au moins desquelles le talon de retenue de la branche coopérant avec le manchon considéré est susceptible d'être inséré. Avantageusement, la géométrie du talon de retenue et la position des encoches sont choisies de telle sorte que le talon de retenue puisse s'insérer dans les deux encoches en position d'utilisation des branches.

Considérées conjointement, pour chaque manchon, les deux encoches qui sont avantageusement alignées dans un même plan diamétral du manchon, forment des points d'appui supplémentaires qui permettent de bien retenir la branche considérée dans les moyens formant logement en position d'utilisation. En effet, lorsque la branche s'étend hors des moyens formant logement, elle est soumise aux contraintes extérieures (manipulation par l'utilisateur, etc.) qui peuvent entraîner une rotation autour de son axe principal.

Avantageusement, pour chacune desdites portions d'extrémité du tube, le deuxième étranglement est formé par une partie du manchon.

Le deuxième étranglement est formé directement sur le manchon pour faciliter la réalisation des moyens formant logement. Le tube peut alors présenter une section transversale circulaire, en particulier au voisinage de ses ouvertures.

Pour chaque manchon, le deuxième étranglement est formé à l'extrémité du manchon qui est tournée vers l'extérieur dudit tube.

Comme pour le premier mode de réalisation, ce deuxième étranglement, pris en combinaison avec le premier étranglement, a pour effet d'éviter le débattement de la branche en position d'utilisation par contact avec la première portion d'extrémité de branche. En effet, comme pour le premier mode de réalisation, dans cette position, le premier étranglement retient le talon de retenue, tandis que le deuxième étranglement coopère avec la partie de branche située entre le talon et le coude.

La monture comporte en outre avantageusement deux capuchons qui coiffent respectivement chacune des portions d'extrémité des moyens formant logement et sont traversées par les branches respectives.

Les capuchons coiffant les portions d'extrémité des moyens formant logement coiffent en particulier le second étranglement qui peut être visible sur la monture et qui peut alors paraître quelque peu inesthétique. La présence de ces capuchons contribue ainsi à masquer ce défaut et permet même d'embellir la monture en présentant par exemple un aspect décoratif. Le fond de chaque capuchon présente une ouverture pour permettre le passage de la branche correspondante.

Ainsi, pour les deux modes de réalisation, les moyens formant logement présentent au moins des premiers étranglements (un à chaque extrémité), ces étranglements étant formés soit directement sur le tube qui constitue les moyens formant logement, soit par une réduction de la section interne d'un tel tube, provoquée par la présence de deux manchons dans ce tube.

Pour simplifier la constitution des montures de lunettes des deux modes de réalisation envisagés, le corps de branche et la première portion d'extrémité de branche forment avantageusement une seule pièce. En fait, c'est la branche elle-même qui, par la zone souple, fait office d'articulation, sans avoir besoin de rapporter d'élément de liaison supplémentaire.

Avantageusement, chaque branche présente une section parallélépipédique dont les côtés s'étendent selon les première et deuxième directions, de sorte que chaque branche ne puisse pas tourner dans les moyens formant logement.

Lorsque chaque branche présente une section parallélépipédique dont les côtés s'étendent selon deux directions, on choisit avantageusement d'orienter les dimensions réduites des premier et deuxième étranglements selon, respectivement, chacune des première et deuxième directions, de sorte que ladite branche ne puisse pas tourner dans lesdits moyens formant logement.

Avantageusement, ledit coude présente un rayon de courbure de l'ordre de 15 mm qui, associé aux premier et troisième étranglements judicieusement espacés sur le tube, permet de bien tenir la branche en position d'utilisation par appui de côtés de la branche contre lesdits étranglements.

Avantageusement, chaque branche est traitée thermiquement de manière à améliorer les propriétés mécaniques du matériau qui la compose.

En outre, ladite zone souple présente avantageusement une zone locale traitée thermiquement de manière à augmenter la souplesse de la zone souple par rapport à la souplesse de la partie courante de la branche.

Les différents traitements de la branche peuvent, par exemple, être réalisés en apposant un moufle sur les zones qui ne doivent pas être traitées.

La zone souple présente avantageusement et, éventuellement en complément du traitement thermique, une section réduite par rapport à ladite partie courante du corps de branche, pour augmenter sa souplesse. La section réduite du corps de branche peut avantageusement être obtenue par étirage ou usinage.

L'invention sera bien comprise et ses avantages apparaîtront mieux à la lecture de la description détaillée qui suit, de modes de réalisation représentés à titre d'exemples non limitatifs.

La description se réfère aux dessins annexés sur lesquels :
- la figure 1 est une vue schématique en perspective d'une monture de lunettes selon un premier mode de réalisation,
- la figure 2 est une coupe selon la ligne II-II de la figure 1 de la monture de lunettes en position de repos,
- la figure 3 est une coupe analogue à la figure 2, avec la monture de lunettes en position d'utilisation,
- la figure 4 est une vue des moyens de retenue selon la flèche IV de la figure 3,
- la figure 5 est une vue schématique en perspective selon la flèche V de la figure 3, montrant en particulier le principe des premier et deuxième étranglements considérés individuellement,
- la figure 6 est une vue du détail VI de la coupe de la figure 2, montrant les deuxième et troisième étranglements avec les branches en position d'utilisation,
- la figure 7 est une vue schématique en perspective d'une monture de lunettes analogue à la figure 1, selon un deuxième mode de réalisation,
- la figure 8 est une coupe selon la ligne VIII-VIII de la figure 7 de la monture de lunettes en position d'utilisation, montrant les moyens de retenue,
- la figure 9 est une coupe selon la ligne IX-IX de la figure 8, et
- la figure 10 est une vue schématique en perspective d'une branche maintenue dans un manchon, montrant en particulier le principe des premier et deuxième étranglements.

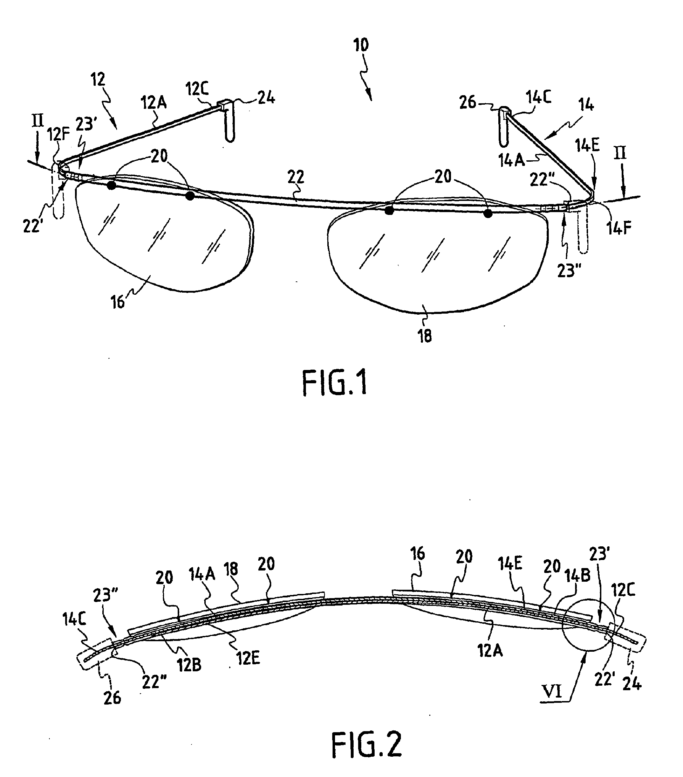

La monture de lunettes comporte un corps de monture 10, deux branches 12 et 14 montrées en traits pleins sur la figure 1, en position d'utilisation, et deux verres de lunettes 16 et 18. Ces verres peuvent être des verres de correction et/ou solaires, selon l'utilisation de la monture. Dans l'exemple représenté, les verres de lunettes 16 et 18 sont fixés par des éléments mécaniques 20 appropriés qui sont apposés sur le corps de monture 10.

Chaque branche 12, respectivement 14, comporte un corps de branche 12A, respectivement 14A, compris entre une première portion d'extrémité de branche 12B, respectivement 14B, et une seconde portion d'extrémité de branche 12C, respectivement 14C. Le corps 12A, respectivement 14A, et la première portion d'extrémité de branche 12B, respectivement 14B, sont avantageusement formés en une seule pièce.

Selon un premier mode de réalisation, le corps de monture 10 comporte des moyens formant logement constitués par un tube unique 22 formé en une seule pièce. Les premières portions d'extrémité de branche 12B et 14B sont respectivement insérées dans le tube 22 par une première ouverture 22' et une deuxième ouverture 22", disposées respectivement à l'extrémité libre d'une première portion d'extrémité 23'et d'une deuxième portion d'extrémité 23" du tube 22. Après une première insertion, des moyens de retenue décrits par la suite, retiennent les premières portions d'extrémité de branche 12B et 14B dans le tube.

En position de repos (représentation en pointillés sur la figure 1), chaque corps de branche 12A, respectivement 14A, est introduit dans le tube 22.

La figure 2 montre la position de repos dans laquelle, les deux corps de branche 12A et 14A sont logés dans le tube 22. Selon la géométrie du tube 22 et la section des branches 12 et 14, lorsqu'elles occupent cette position de repos, les deux branches 12 et 14 sont soit côte à côte, comme représenté sur la figure 2, soit juxtaposées l'une au-dessus de l'autre. Pour faciliter l'insertion des branches 12 et 14 dans le tube 22, l'extrémité libre de chaque première portion d'extrémité de branche 12B et 14B est effilée. Ainsi, lors de leur insertion dans le tube 22, les deux branches 12 et 14 se dévient mutuellement pour coulisser l'une contre l'autre. Ce coulissement peut être facilité lorsque la première portion d'extrémité de branche 12B, respectivement 14B, présente en outre une courbure qui lui permet de venir en appui contre la paroi interne du tube 22, lorsque la branche 12, respectivement 14, est en position de repos. En effet, dans ce cas, la seconde branche introduite va se déformer élastiquement pour glisser le long de la courbure de la première branche préalablement introduite.

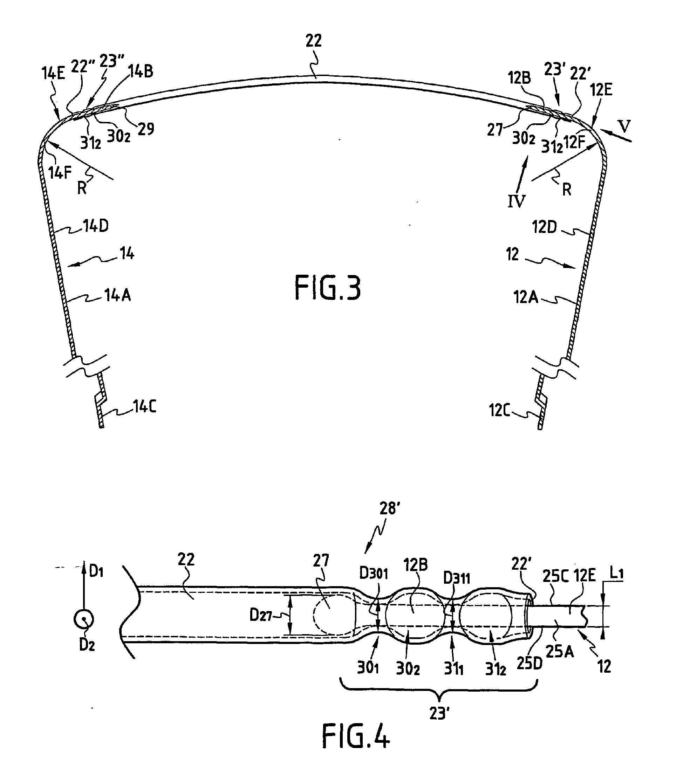

La figure 3 montre la monture de lunettes en position d'utilisation, avec les deux corps branches 12A et 14A hors du tube 22. Les deux corps de branches 12A et 14A, possèdent chacun une partie courante 12D, respectivement 14D, qui présente une souplesse moyenne telle que le corps de branche est suffisamment rigide pour avoir sensiblement la tenue d'une branche classique qui permet au corps de branche 12A, respectivement 14A, d'assurer sa fonction, consistant à maintenir la monture de lunettes en place sur le visage de l'utilisateur.

En outre, les deux corps de branches 12A et 14A possèdent chacun une zone souple 12E, respectivement 14E, qui présente une souplesse supérieure à la souplesse de la partie courante respective 12D, 14D. En position d'utilisation, la zone souple 12E, respectivement 14E, forme un coude 12F, respectivement 14F, de rayon de courbure R, préférentiellement de l'ordre de 15mm.

D'une part, la présence de ces deux coudes 12F et 14F, permet aux branches 12 et 14 d'adopter leur position d'utilisation naturellement dès lors que les zones souples 12E et 14E se trouvent extraites du tube 22 sur une longueur suffisante. En effet, du fait de la courbure des zones souples 12E et 14E, dès que les parties courantes des branches 12D et 14D sont hors du tube 22, elles se positionnent sensiblement parallèlement entre elles et sensiblement transversalement aux verres 16 et 18, comme dans le cas d'une monture de lunettes ayant des branches classiques.

D'autre part, en raison de la souplesse des zones 12E et 14E, les corps de branche 12A et 14A peuvent facilement être introduits dans le tube 22 pour venir occuper leur position de repos. En effet, une simple ouverture de l'angle du coude 12F, respectivement 14F, par écartement manuel des branches 12 et 14, consistant à amener les parties courantes 12D et 14D dans le prolongement du tube 22, permet de déformer la zone souple 12E, respectivement 14E, de sorte que chaque corps de branche 12A et 14A, vient en regard des ouvertures respectives 22' et 22" pour pouvoir être introduit dans le tube 22.

Pour obtenir la zone souple 12E, respectivement 14E, on procède en plusieurs étapes. Les branches 12 et 14 sont mises en forme de manière à former le coude 12F, respectivement 14F, puis traitées thermiquement. Pour ce faire, on choisira préférentiellement un alliage à haute teneur en cobalt, autour de 40%, comme matériau pour constituer les branches, par exemple du Nivaflex, de l'Elgiloy ou du Phynox, pouvant être traité thermiquement pendant plusieurs heures entre 350°C et 550°C.

La souplesse requise pour obtenir une zone suffisamment souple pour que le coude 12F, respectivement 14F, puisse être écarté et revenir dans sa position de manière réversible, peut être obtenue par deux moyens différents pouvant, selon le cas être combinés et qui peuvent être effectués avant ou après le traitement thermique précité des branches 12 et 14, ces moyens comprenant une réduction de la section et/ou un traitement thermique comme expliqué ci-après.

Ainsi, la différence de souplesse entre la zone souple 12E, respectivement 14E, et la partie courante 12D, respectivement 14D, peut être obtenue par réduction de la section de la zone souple, obtenue par étirage ou usinage de la zone souple 12E, respectivement 14E.

La section réduite 12E, respectivement 14E, présente une variation régulière de ses cotes dans au moins une direction transversale à sa longueur. Par exemple, la hauteur de la branche restant inchangée, son épaisseur peut varier continûment entre une épaisseur initiale de 0,40 mm, qui est réduite jusqu'à 0,15 mm, puis à nouveau augmentée jusqu'à 0,40 mm. Ainsi, on peut, par exemple, tous les 3 mm environ, avoir les côtes suivantes : 0,40-0,30-0,20-0,15-0,20-0,30-0,40 mm. On peut également diminuer la section dans ses deux dimensions.

Par exemple, on a constaté qu'en choisissant des branches 12 et 14 en Phynox ayant, dans la partie courante 12D, respectivement 14D, une section de 2 mm par 4 mm, on obtenait les qualités mécaniques souhaitées en soumettant ces branches 12 et 14 à un durcissement par chauffage à 500°C sous atmosphère contrôlée pendant trois heures et en réalisant un usinage de la zone souple coudée 12F, respectivement 14F, de ces branches 12 et 14 avec les variations de côtés indiquées ci-dessus. La différence de souplesse entre la zone souple 12E, respectivement 14E, et la partie courante 12D, respectivement 14D, peut être aussi être obtenue par un traitement thermique local, éventuellement en complément de la réduction de la section de la zone souple 12E, respectivement 14E, précitée.

Par exemple, après avoir effectué le traitement de trempe de l'ensemble des branches 12 et 14 et la réduction de la section de la zone souple 12E, respectivement 14E, on peut effectuer un traitement thermique local des zones souples 12E et 14E. Pour ce faire, on peut avantageusement protéger les parties qui ne doivent pas être soumises au traitement, par un moufle judicieusement disposé (non représenté), en particulier sur les parties courantes 12D et 14D et les secondes portions d'extrémité de branche 12C et 14C qui doivent rester moins souples.

Les secondes portions d'extrémité de branche 12C et 14C peuvent être munies d'une spatule 24, respectivement 26, par exemple fixée par des moyens connus sur la portion d'extrémité de branche 12C, respectivement 14C. Ces spatules 24 et 26 permettent de faire le retour des branches 12 et 14 pour les retenir derrière l'oreille de l'utilisateur, pour un bon maintien de la monture 10 et doivent donc être fixées de manière rigide aux portions d'extrémité de branche 12C et 14C. Les spatules 24 et 26 pourront être judicieusement choisies pour pouvoir être adaptées à la morphologie de l'utilisateur par déformation manuelle. On peut aussi prévoir des branches 12 et 14 rectilignes serrant légèrement la tête de l'utilisateur au-dessus des oreilles, pour retenir la monture en place. Dans ce cas également, les secondes portions d'extrémité 12C et 14C doivent être suffisamment rigides.

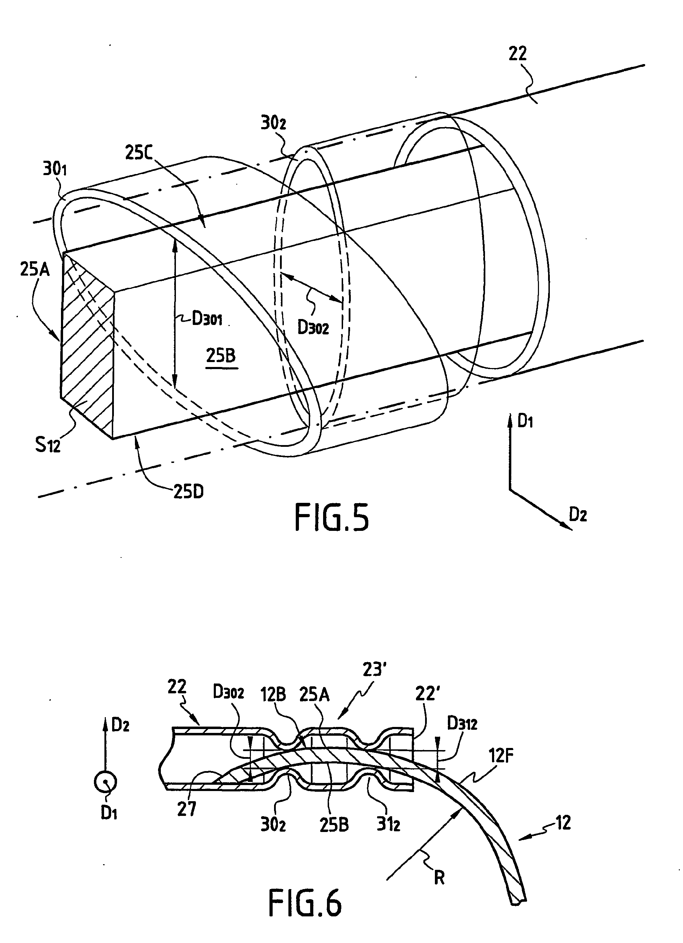

Les figures 4 et 5 montrent en détails les moyens de retenue 28'. Pour toute la suite de la description, on s'intéressera uniquement à la branche 12, des moyens de retenue 28" semblables étant présents au voisinage de l'autre portion d'extrémité 22" du tube 22, pour retenir la branche 14.

Avantageusement, la section S₁₂ de la branche 12 est parallélépipédique selon deux directions D₁ et D₂. Les deux directions D₁ et D₂ peuvent être sensiblement perpendiculaires, de sorte que la section de la branche S₁₂ est rectangulaire avec des côtés 25A et 25B sensiblement parallèles selon la direction D₁ et de longueur identique, et des côtés 25C et 25D sensiblement parallèles selon la direction D₂ et de longueur identique. Lorsque les quatre côtés 25A à 25D présentent la même longueur, la section S₁₂ est carrée.

Par exemple, comme représenté sur la figure 4, les moyens de retenue 28' comporte un talon de retenue 27, considéré selon la direction D₂, forme un disque 27 qui présente au moins un diamètre D₂₇, mesuré selon la direction D₁, supérieur à la longueur L₁ de la branche dans la même direction.

De manière générale, le talon de retenue 27 présente, dans au moins une direction transversale à la longueur de la branche 12, une dimension supérieure à la dimension courante du corps de branche 12A dans la même direction. Pour la suite de la description, on considèrera que cette direction transversale est D₁ et que, dans cette direction D₁, les dimensions du talon de retenue 27 et la dimension courante du corps de branche 12A sont respectivement D₂₇ et L₁.

Dans cette configuration, les moyens de retenue 28' comportent en outre un premier étranglement 30₁ formé sur le tube 22 dans la première portion d'extrémité 23' du tube 22 et qui présente une dimension réduite D₃₀₁ dans la première direction D₁, comme illustré sur la figure 4. Cette dimension réduite D₃₀₁ est inférieure à la dimension D₂₇ du talon de retenue 27, pour que ce dernier soit bien retenu lors de l'extraction de la branche 12 hors du tube 22, mais très légèrement supérieure à L₁ pour que le corps de branche 12A puisse rentrer dans le tube 22 sans effort particulier.

Au voisinage du premier étranglement 30₁, le tube 22 comporte un deuxième étranglement 30₂ qui présente une dimension réduite D₃₀₂ qui s'étend selon la direction D₂. Selon la géométrie de la branche 12 décrite, les deux étranglements 30₁ et 30₂ sont donc sensiblement orthogonaux, ce qui empêche toute rotation de la branche 12 dans le tube 22.

En position d'utilisation, le deuxième étranglement 30₂, associé à la courbure de la première portion d'extrémité de branche 12B, entraîne une limitation du débattement de la branche 12 dans le tube 22, dans un plan orthogonal à la direction D₁. En effet, l'extrémité du talon de retenue 27 vient en appui contre la paroi interne du tube 22 et les côtés 25A et 25B viennent quant à eux, en appui contre les parois internes du deuxième étranglement 30₂.

Un troisième étranglement 31₂ et un quatrième étranglement 31₁ sont formés dans la portion d'extrémité 23' du tube 22 plus près de l'ouverture 22'. Le troisième étranglement 31₂, analogue au deuxième étranglement 30₂, présente une dimension réduite D₃₁₂ selon la direction D₂, tandis que le quatrième étranglement 31₁ est analogue au premier étranglement 30₁ et présente une dimension réduite D₃₁₁ selon la direction D₁.

En position d'utilisation, la portion d'extrémité de branche 12B qui reste dans le tube 22, vient s'arc-bouter, avec ces côtés 25A et 25B, contre le deuxième 30₂ et le troisième étranglement 31₂, limitant encore plus le débattement possible de la branche 12, comme représenté sur la figure 6. Le quatrième étranglement 31₁, associé au premier étranglement 30₁, permettent quant à eux, de diminuer le débattement de la branche 12 dans l'autre direction, à savoir dans un plan orthogonal à la direction D₂, par appui des côtés 25C et 25D contre les parois internes des premier 30₁ et quatrième 31₁ étranglements.

Lorsque les quatre étranglements 30₁, 30₂, 31₁ et 31₂ sont présents, ils définissent conjointement huit points d'appuis, ce qui permet de faciliter l'introduction de la branche 12 dans le tube 22, par glissement sur ces huit points.

Les étranglements 30₁, 30₂, 31₁ et 31₂ sont simplement réalisés par des pincements localisés du tube, respectivement selon les première et deuxième directions D₁ et D₂.

Pour ce faire, on peut par exemple, réaliser le ou les étranglements dans la deuxième direction D₂ (deuxième 30₂ et/ou troisième étranglement 31₂), puis introduire les branches 12 et 14 qui passent à travers les étranglements sans difficulté, puisque leur talon respectif 27, 29, est dans l'autre direction D₁ ; et enfin, réaliser le ou les étranglements dans la première direction D₁ (premier 30₁ et éventuellement quatrième étranglement 31₁) de manière à empêcher l'extraction des branches 12 et 14 hors du tube 22.

On peut aussi réaliser tous ces étranglements 30₁, 30₂, 31₁ et 31₂ à la suite l'un de l'autre ou simultanément, après avoir introduit au préalable les talons 27 et 29 respectifs des branches 12 et 14, dans le tube 22 en veillant à les maintenir en place dans le tube 22, jusqu'à ce que le premier étranglement 30₁ soit terminé.

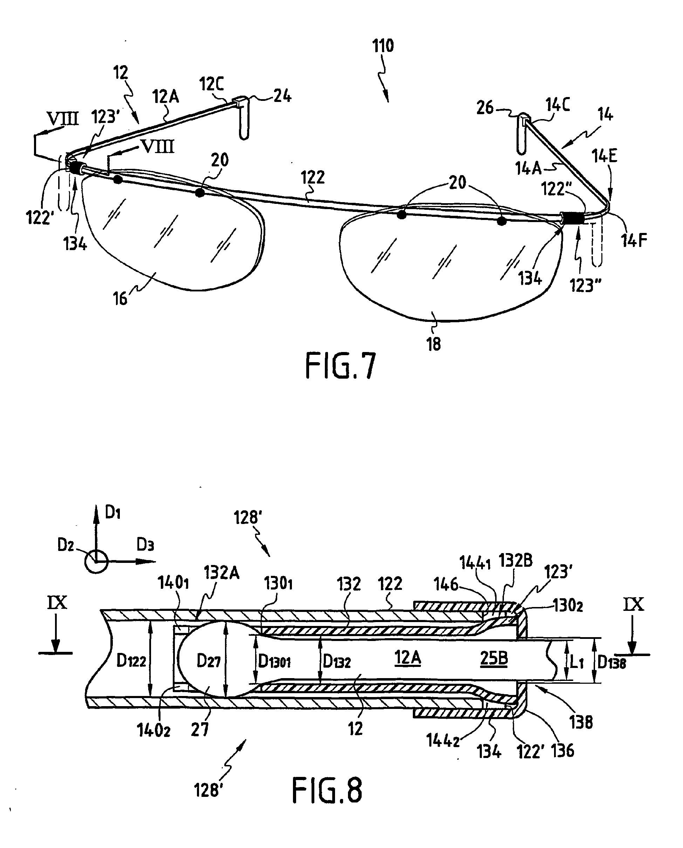

Selon un deuxième mode de réalisation représenté sur les figures 7 à 10, les moyens formant logement sont formés par un tube 122 et deux manchons 132 respectivement insérés dans le tube 122 par ses ouvertures 122' et 122". Les références sont inchangées pour tous les éléments communs aux deux modes de réalisation, en particulier les branches 12 et 14 sont identiques. Dans ce deuxième mode de réalisation les moyens de retenue 128' comportent les talons de retenue 27 respectifs des branches 12 et 14.

La figure 7 illustre en traits pleins la position d'utilisation dans laquelle les branches 12 et 14 sont sorties hors du tube 122. La position de repos, dans laquelle les deux branches 12 et 14 sont logées dans le tube 122, est représentée en traits pointillés.

Chaque manchon 132 est inséré au moins en partie dans le tube 122, respectivement par ses première et deuxième ouvertures 122' et 122", de sorte que les manchons 132 se présentent respectivement au voisinage des première et deuxième portions d'extrémités 123' et 123" des moyens formant logement.

Un capuchon 134 est disposé sur chacune des portions d'extrémités 123' et 123" des moyens formant logement, de manière à recouvrir et à masquer chacun des manchons 132, ainsi que chacune des ouvertures 122' et 122" respectives du tube 122 qui peuvent être quelque peu inesthétiques, en particulier pour une monture fine.

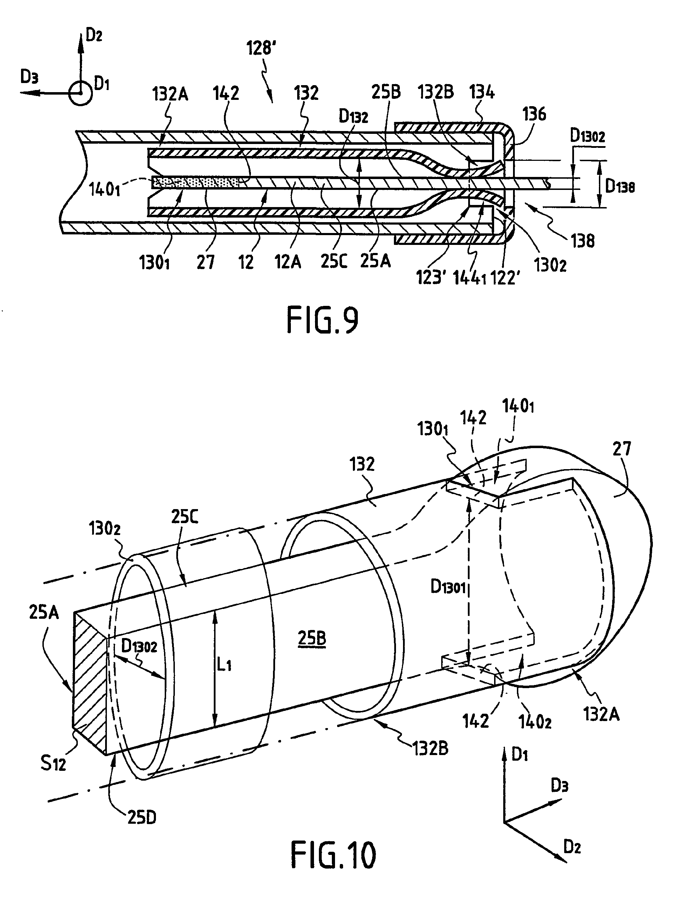

Ces capuchons 134 représentés plus en détails sur les figures 8 et 9, sont préférentiellement cylindriques et sont emmanchés sur le contour extérieur du tube 122. Les capuchons 134 peuvent être fixés à ce dernier par collage ou soudage. Le fond 136 de chaque capuchon 134 présente une ouverture débouchante 138 de taille adaptée pour permettre le passage de la branche correspondante 12 et 14.

L'ouverture 138 de chaque capuchon 134 est préférentiellement circulaire de sorte que la réalisation d'un tel capuchon 134 est très simple. Pour être au plus proche de la géométrie de la branche 12 ou 14, qui présente quant à elle une section rectangulaire S₁₂ (illustrée sur la figure 10), le diamètre D₁₃₈ de cette ouverture 138 est préférentiellement légèrement supérieur à la plus grande dimension de la branche, en l'espèce à la longueur L₁ des côtés 25A et 25B selon la première direction D₁.

Pour toute la suite de la description, on considère une portion d'extrémité 123' du tube 122 avec son manchon 132 inséré dans cette portion d'extrémité 123', l'autre portion d'extrémité avec son autre manchon étant analogue.

Le premier étranglement 130₁ est, dans ce deuxième mode de réalisation, formé sur le manchon 132 au voisinage de sa première extrémité 132A qui est tournée vers l'intérieur du tube 122. En l'espèce, sur la figure 8, le manchon 132 présente une dimension diamétrale dans la première direction D₁ qui est plus petite que la dimension D₂₇ du talon de retenue 27 des moyens de retenue 128', tout en étant plus grande que la dimension courante L₁ du corps de branche 12A.

Ainsi, le premier étranglement 130₁ ne correspond pas nécessairement à une partie de manchon de dimension diamétrale réduite par rapport au diamètre intérieur courant D₁₃₂ du manchon 132, mais il est réalisé par la diminution réduite entre le manchon 132 et le tube 122, en l'espèce par une dimension diamétrale D₁₃₀₁ du manchon 132 qui est plus petite que le diamètre intérieur du tube 122.

En outre, le manchon 132 présente deux encoches 140₁ et 140₂ diamétralement opposées qui s'étendent dans une direction D₃, c'est-à-dire selon la longueur du manchon 132 de manière à retenir le talon de retenue 27 en position d'utilisation. Ces encoches 140₁ et 140₂ peuvent par exemple être pratiquées simultanément à l'aide d'une scie qui se déplace dans la direction D₃. Cette troisième direction D₃ forme avantageusement avec les première et deuxième directions D₁ et D₂, un repère sensiblement orthogonal.

En conséquence, dès lors que le talon de retenue 27 présente un diamètre D₂₇ qui est supérieur au diamètre courant intérieur D₁₃₂ du manchon 132, mais qui est sensiblement inférieur au diamètre intérieur courant D₁₂₂ du tube 122, le talon de retenue 27 vient en appui contre le fond 142 d'au moins une des deux encoches 140₁, 140₂. Le premier étranglement 130₁ présente ainsi, selon la première direction D₁, une dimension réduite D₁₃₀₁ qui est sensiblement égale au diamètre intérieur D₁₃₂ du manchon 132.

Le deuxième étranglement 130₂ préférentiellement formé sur la seconde extrémité 132B du manchon 132 vers l'extérieur du tube 122, présente quant à lui réellement une dimension réduite D₁₃₀₂ dans au moins une direction. En l'espèce avec la configuration du talon de retenue 27 précédemment décrite, cette direction est la deuxième direction D₂.

Cette dimension D₁₃₀₂ est inférieure à la dimension courante D₁₃₂ du manchon 132, de sorte qu'en position d'utilisation, le deuxième étranglement 130₂, associé à la courbure de la première portion d'extrémité de branche 12B, entraîne une limitation du débattement de la branche 12 dans le manchon 132, dans un plan orthogonal à la première direction D₁. En effet, l'extrémité du talon de retenue 27 vient en appui contre la paroi interne 142 d'au moins une encoche 140₁, 140₂, tandis que les côtés 25A et 25B viennent quant à eux, en appui contre les parois internes du deuxième étranglement 130₂.

Avantageusement, le deuxième étranglement 130₂ présente en outre dans la première direction D₁ une dimension supérieure à celle du diamètre courant D₁₂₂ du tube 122, et le tube 122 présente, au voisinage de sa portion d'extrémité 123', deux encoches 144₁, respectivement 144₂, dans la deuxième direction D₂. Ces encoches 144 permettent de bien retenir le manchon 132 dans le tube 122 par coopération sensiblement permanente du manchon 132 avec les parois et le fond des encoches 144₁ et 144₂, selon le même principe que celui de rétention du talon de retenue 27 dans les encoches 140₁ et 140₂ présentes sur le manchon 132 précédemment décrites.

En l'espèce, le deuxième étranglement 130₂ est plaqué par le capuchon 134, contre le fond 146 d'au moins des deux encoches 144₁,144₂, du tube 122 tendant alors à appuyer le manchon 132 vers l'intérieur de ce dernier. Une fixation du manchon 132 par collage, soudage ou tout autre moyen de fixation connu, peut permettre d'assurer le bon maintien du manchon 132 dans le tube 122.

## Revendications

1. Monture de lunettes comportant :
- deux branches (12, 14) ayant chacune un corps de branche (12A, 14A) compris entre une première portion d'extrémité de branche (12B, 14B) et une seconde portion d'extrémité de branche (12C, 14C),
- un corps de monture (10 ; 110) ayant des moyens formant logement (22 ; 122, 132) dans lesquels chacune des premières portions d'extrémité de branche (12B, 14B) est logée et dans lesquels chacun des corps de branche (12A, 14A) est susceptible d'être inséré par respectivement une première (22' ; 122') et une deuxième ouverture (22" ; 122") desdits moyens formant logement (22 ; 122, 132), pour adopter une position de repos, lesdits corps de branche (12A, 14A) étant susceptibles d'être extraits de ces moyens formant logement (22; 122, 132) pour adopter une position d'utilisation, lesdits moyens formant logement (22 ; 122, 132) comportant une première (23'; 123') et une deuxième portion d'extrémité (23" ; 123") situées respectivement au voisinage de ladite première et ladite deuxième ouverture (22', 22" ; 122', 122") et,
- des moyens de retenue (28' ; 128') pour retenir chacune desdites premières portions d'extrémité de branche (12B, 14B) dans ladite position d'utilisation, dans respectivement ladite première (23' ; 123') et ladite deuxième (23" ; 123") portion d'extrémité desdits moyens formant logement (22 ; 122, 132), lesdites premières portions d'extrémité de branche (12B, 14B) comportant chacune un talon de retenue (27, 29),
**caractérisée en ce que** chacune desdites portions d'extrémité (23', 23" ; 123', 123") desdits moyens formant logement (22; 122, 132) comporte au moins un premier étranglement (30₁ ; 130₁) qui est apte à retenir chaque talon de retenue (27, 29) dans lesdits moyens formant logement (22 ; 122, 132) et,
**en ce qu'**au voisinage de ladite première portion d'extrémité de branche (12B, 14B), chaque corps de branche (12A, 14A) présente une zone souple (12E, 14E), qui présente une souplesse supérieure à la souplesse d'une partie courante (12D, 14D) dudit corps de branche (12A, 14A) et qui forme, en position d'utilisation, un coude (12F, 14F) susceptible d'être écarté par déformation élastique pour pénétrer dans les moyens formant logement (22 ; 122, 132) en position de repos et qui reprend naturellement par élasticité, lors de son extraction lors des moyens formant logement (22; 122, 132), sa forme de coude (12F, 14F) donnant ainsi à chaque corps de branche (12A, 14A) sa position d'utilisation.

2. Monture selon la revendication 1, **caractérisée en ce que** ledit premier étranglement (30₁ ; 130₁) présente une dimension réduite (D₃₀₁ ; D₁₃₀₁) dans au moins une première direction (D₁).

3. Monture selon la revendication 2, **caractérisée en ce que** chacune desdites portions d'extrémité (23', 23" ; 123', 123") desdits moyens formant logement (22 ; 122, 132) comporte, en outre, au voisinage de chaque premier étranglement (30₁; 130₁), un deuxième étranglement (30₂; 130₂) qui présente une dimension réduite (D₃₀₂ ; D₁₃₀₂) dans une deuxième direction (D₂).

4. Monture selon les revendications 2 et 3, **caractérisée en ce que** ladite deuxième direction est transversale à ladite première direction (D₁).

5. Monture selon l'une quelconque des revendications 3 et 4, **caractérisée en ce que** chacune desdites portions d'extrémité (23', 23") desdits moyens formant logement (22) comporte, en outre, plus proche de l'ouverture (22', 22"), un troisième étranglement (31₂) qui présente une dimension réduite (D₃₁₂) dans ladite deuxième direction (D₂).

6. Monture selon l'une quelconque des revendications précédentes, **caractérisée en ce que** chacune desdites portions d'extrémité (23', 23") desdits moyens formant logement (22) comporte, en outre, un quatrième étranglement (31₁) qui est analogue au premier étranglement (30₁), mais qui est plus proche de l'ouverture (22', 22").

7. Monture selon l'une quelconque des revendications précédentes, **caractérisée en ce que** les moyens formant logement (122, 132) comportent un tube (122) et deux manchons (132) insérés dans ledit tube (122) respectivement aux première et deuxième portions d'extrémité (123', 123") desdits moyens formant logement (122, 132).

8. Monture selon la revendication précédente, **caractérisée en ce que** pour chacune desdites portions d'extrémité (123', 123") du tube (122) ledit premier étranglement (130₁) est formé par une partie du manchon (132) insérée dans ladite portion d'extrémité (123', 123") considérée.

9. Monture selon la revendication précédente, **caractérisée en ce que** l'extrémité (132A) de chaque manchon (132) tournée vers l'intérieur du tube (122), présente au moins une encoche (140₁, 140₂) dans laquelle le talon de retenue (27) de la branche (12, 14) coopérant avec le manchon (132) considéré est susceptible d'être inséré.

10. Monture selon la revendication précédente, **caractérisée en ce que** l'extrémité (132A) de chaque manchon (132) située à l'intérieur du tube (122), présente deux encoches (140₁, 140₂) dans l'une au moins desquelles le talon de retenue (27) de la branche (12, 14) coopérant avec le manchon (132) considéré est susceptible d'être inséré.

11. Monture selon les revendications 2 et 7 et l'une quelconque des revendications 2 à 10, **caractérisée en ce que** pour chacune desdites portions d'extrémité (123', 123") des moyens formant logement (122, 132) ledit deuxième étranglement (130₂) est formé par une partie du manchon (132).

12. Monture selon l'une quelconque des revendications précédentes, **caractérisée en ce qu'**elle comporte en outre deux capuchons (134) qui coiffent respectivement chacune desdites portions d'extrémité (123', 123") desdits moyens formant logement (122, 132) et sont traversées par les branches respectives (12, 14).

13. Monture selon l'une quelconque des revendications 1 à 6, **caractérisée en ce que** lesdits moyens formant logement (22) sont formés par un tube unique (22) et **en ce que** chaque étranglement (30₁, 30₂, 31₁, 31₂) est formé sur ledit tube (22) qui constitue une seule pièce.

14. Monture selon l'une quelconque des revendications précédentes, **caractérisée en ce que** chaque branche (12, 14) présente une section parallélépipédique (S₁₂) dont les côtés (25A, 25B, 25C, 25D) s'étendent selon les première et deuxième directions (D₁, D₂), de sorte que chaque branche (12, 14) ne puisse pas tourner dans lesdits moyens formant logement (22 ; 122, 132).

15. Monture selon l'une quelconque des revendications précédentes, **caractérisée en ce que** le corps de branche (12A, 14A) et la première portion d'extrémité de branche (12B, 14B) forment une seule pièce.

16. Monture selon l'une quelconque des revendications précédentes, **caractérisée en ce que** ledit coude (12F, 14F) présente un rayon de courbure (R) de l'ordre de 15 mm.

17. Monture selon l'une quelconque des revendications précédentes, **caractérisée en ce que** chaque branche (12, 14) est traitée thermiquement.

18. Monture selon l'une quelconque des revendications précédentes, **caractérisée en ce que** ladite zone souple (12E, 14E) présente une zone locale (12E, 14E) traitée thermiquement.

19. Monture selon l'une quelconque des revendications précédentes, **caractérisée en ce que** ladite zone souple (12E, 14E) présente en outre une section réduite (12E, 14E) par rapport à ladite partie courante (12D, 14D) du corps de branche (12A, 14A).

20. Monture selon la revendication 19, **caractérisée en ce que** ladite section réduite (12E, 14E) dudit corps de branche (12A, 14A) est obtenue par étirage.

21. Monture selon la revendication 19, **caractérisée en ce que** ladite section réduite (12E, 14E) dudit corps de branche (12A, 14A) est obtenue par usinage.

## Claims

1. A spectacles frame comprising:
- two temples (12, 14), each of which has a temple body (12A, 14A) lying between a first temple end portion (12B, 14B) and a second temple end portion (12C, 14C);
- a frame body (10; 110) having housing-forming means (22; 122, 132) inside which both of the first temple end portions (12B, 14B) are housed, and into which each of the temple bodies (12A, 14A) can be inserted via respective ones of a first opening (22'; 122') and of a second opening (22"; 122") in said housing-forming means (22; 122, 132) so as to take up a rest position, said temple bodies (12A, 14A) being suitable for being extracted from said housing-forming means (22; 122, 132) so as to take up an in-use position, said housing-forming means (22; 122, 132) having a first end portion (23'; 123') and a second end portion (23"; 123") situated respectively in the vicinities of said first and second openings (22', 22"; 122', 122"); and
- retaining means (28'; 128') for retaining each of said first temple end portions (12B, 14B) in said in-use position, in a respective one of said first end portion (23'; 123') and said second end portion (23"; 123") of said housing-forming means (22; 122, 132), each of said first temple end portions (12B, 14B) being provided with a retaining head (27, 29);
said spectacles frame being **characterised in that** each of said end portions (23', 23"; 123', 123") of said housing-forming means (22; 122, 132) is provided with at least a first constriction (30₁; 130₁) which is suitable for retaining the respective retaining head (27, 29) inside said housing-forming means (22; 122, 132); and
**in that**, in the vicinity of said first temple end portion (12B, 14B), each temple body (12A, 14A) has a flexible zone (12E, 14E) which has flexibility greater than the flexibility of an ordinary portion (12D, 14D) of said temple body (12A, 14A) and which, in the in-use position, forms a bend (12F, 14F) suitable for being opened out by resilient deformation for penetrating into the housing-forming means (12; 122, 132) in the rest position and which naturally takes up by resilience, when extracted from the housing-forming means (12; 122, 132), its bent shape (12F, 14F), thus providing an in-use position for each temple body (12A, 14A).

2. A spectacles frame according to claim 1, **characterised in that** said first constriction (30₁; 130₁) has a small dimension (D₃₀₁; D₁₃₀₁) in at least a first direction (D₁).

3. A spectacles frame according to claim 2, **characterised in that** each of said end portions (23', 23"; 123', 123") of said housing-forming means (22; 122, 132) is further provided with a second constriction (30₂; 130₂) in the vicinity of each first constriction (30₁; 130₁), which second constriction has a small dimension (D₃₀₂; D₁₃₀₂) in a second direction (D₂).

4. A spectacles frame according to claims 2 and 3, **characterised in that** said second direction is transverse to said first direction (D₁).

5. A spectacles frame according to claim 3 or claim 4, **characterised in that** each of said end portions (23', 23") of said housing-forming means (22) is further provided with a third constriction (31₂) closer to the opening (22', 22"), which third constriction has a small dimension (D₃₁₂) in said second direction (D₂).

6. A spectacles frame according to any one of the preceding claims, **characterised in that** each of said end portions (23', 23") of said housing-forming means (22) is further provided with a fourth constriction (31₁) which is analogous to the first constriction (30₁), but which is closer to the opening (22', 22").

7. A spectacles frame according to any one of the preceding claims, **characterised in that** the housing-forming means (122, 132) comprise a tube (122) and two sleeves (132) inserted into said tube (122) at respective ones of the first and second end portions (123', 123") of said housing-forming means (122, 132).

8. A spectacles frame according to the preceding claim, **characterised in that**, for each of said end portions (123', 123") of the tube (122), said first constriction (130₁) is formed by a portion of the sleeve (132) that is inserted into said respective end portion (123', 123").

9. A spectacles frame according to the preceding claim, **characterised in that** the end (132A) of each sleeve (132) which faces towards the inside of the tube (122) has at least one notch (140₁, 140₂) into which the retaining head (27) of the temple (12, 14) co-operating with the corresponding sleeve (132) can be inserted.

10. A spectacles frame according to the preceding claim, **characterised in that** the end (132A) of each sleeve (132) which is situated inside the tube (122) has two notches (140₁, 140₂) into at least one of which the retaining head (27) of the temple (12, 14) that co-operates with the corresponding sleeve (132) can be inserted.

11. A spectacles frame according to claims 2 and 7, and according to any one of claims 2 to 10, **characterised in that**, for each of said end portions (123', 123") of the housing-forming means (122, 132), said second constriction (130₂) is formed by a portion of the sleeve (132).

12. A spectacles frame according to any one of the preceding claims, **characterised in that** it is further provided with two caps (134) which cover respective ones of said end portions (123', 123") of said housing-forming means (122, 132), and through which respective ones of the temples (12, 14) pass.

13. A spectacles frame according to any one of claims 1 to 6, **characterised in that** said housing-forming means (22) are formed by a single tube (22), and **in that** each constriction (30₁, 30₂, 31₁, 31₂) is formed in said tube (22) which is implemented in one piece.

14. A spectacles frame according to any one of the preceding claims, **characterised in that** each temple (12, 14) has a cross-section (S₁₂) of parallelogram shape with sides (25A, 25B, 25C, 25D) extending in the first and second directions (D₁, D₂) so that each temple (12, 14) cannot turn in said housing-forming means (22; 122, 132).

15. A spectacles frame according to any one of the preceding claims, **characterised in that** the temple body (12A, 14A) and the first temple end portion (12B, 14B) form a single piece.

16. A spectacles frame according to any one of the preceding claims, **characterised in that** said bend (12F, 14F) has a radius of curvature (R) of about 15 mm.

17. A spectacles frame according to any one of the preceding claims, **characterised in that** each temple (12, 14) is heat treated.

18. A spectacles frame according to any one of the preceding claims, **characterised in that** said flexible zone (12E, 14E) has a local zone (12E, 14E) that is heat treated.

19. A spectacles frame according to any one of the preceding claims, **characterised in that** said flexible zone (12E, 14E) further has a small cross-section (12E, 14E) that is smaller than the cross-section of said ordinary portion (12D, 14D) of the temple body (12A, 14A).

20. A spectacles frame according to claim 19, **characterised in that** said small cross-section (12E, 14E) of said temple body (12A, 14A) is obtained by drawing.

21. A spectacles frame according to claim 19, **characterised in that** said small cross-section (12E, 14E) of said temple body (12A, 14A) is obtained by machining.

## Patentansprüche

1. Brillenfassung umfassend:
- zwei Bügel (12, 14), die jeweils einen Bügelkörper (12A, 14A) zwischen einem ersten Bügelendabschnitt (12B, 14B) und einem zweiten Bügelendabschnitt (12C, 14C) umfassen,
- einen Fassungskörper (10; 110), der eine Aufnahme bildende Mittel (22; 122, 132) aufweist, in denen ein jeder der ersten Bügelendabschnitte (12B, 14B) gelagert ist und in die ein jeder der Bügelkörper (12A, 14A) über eine erste Öffnung (22'; 122') bzw. eine zweite Öffnung (22"; 122") der eine Aufnahme bildenden Mittel (22; 122, 132) eingeführt werden kann, um eine Ruhestellung einzunehmen, wobei die Bügelkörper (12A, 14A) geeignet sind, aus diesen eine Aufnahme bildenden Mitteln (22; 122, 132) herausgezogen zu werden, um eine Gebrauchsstellung einzunehmen, wobei die eine Aufnahme bildenden Mittel (22; 122, 132) einen ersten Endabschnitt (23'; 123') und einen zweiten Endabschnitt (23"; 123") aufweisen, die in der Nähe der ersten bzw. zweiten Öffnung (22', 22"; 122', 122") gelegen sind, und
- Haltemittel (28'; 128'), um einen jeden der ersten Bügelendabschnitte (12B, 14B) in der Gebrauchsstellung in dem ersten Endabschnitt (23'; 123') bzw. zweiten Endabschnitt (23"; 123") der eine Aufnahme bildenden Mittel (22; 122, 132) zu halten, wobei die ersten Bügelendabschnitte (12B, 14B) jeweils einen Halteansatz (27, 29) aufweisen,
**dadurch gekennzeichnet, daß** ein jeder der Endabschnitte (23', 23"; 123', 123") der eine Aufnahme bildenden Mittel (22; 122, 132) wenigstens eine erste Einschnürung (30₁; 130₁) aufweist, die geeignet ist, jeden Halteansatz (27, 29) in den eine Aufnahme bildenden Mitteln (22; 122, 132) zu halten, und
dadurch, daß in der Nähe des ersten Bügelendabschnittes (12B, 14B) jeder Bügelkörper (12A, 14A) einen flexiblen Bereich (12E, 14E) aufweist, der eine höhere Flexibilität als ein durchgehender Teil (12D, 14D) des Bügelkörpers (12A, 14A) aufweist und der in der Gebrauchsstellung eine Abwinklung (12F, 14F) bildet, welche geeignet ist, durch elastische Verformung geöffnet zu werden, um in der Ruhestellung in die eine Aufnahme bildenden Mittel (22; 122, 132) einzudringen und die - wenn sie aus den eine Aufnahme bildenden Mitteln (22; 122, 132) herausgezogen wird - auf natürliche Weise durch Elastizität wieder ihre Abwinklungsform (12F, 14F) annimmt, wodurch jeder Bügelkörper (12A, 14A) seine Gebrauchsstellung erhält.

2. Fassung nach Anspruch 1, **dadurch gekennzeichnet, daß** die erste Einschnürung (30₁; 130₁) eine verringerte Abmessung (D₃₀₁; D₁₃₀₁) in wenigstens einer ersten Richtung (D₁) aufweist.

3. Fassung nach Anspruch 2, **dadurch gekennzeichnet, daß** ein jeder der Endabschnitte (23', 23"; 123', 123") der eine Aufnahme bildenden Mittel (22; 122, 132) ferner in der Nähe jeder ersten Einschnürung (30₁; 130₁) eine zweite Einschnürung (30₂; 130₂) aufweist, die eine verringerte Abmessung (D₃₀₂; D₁₃₀₂) in einer zweiten Richtung (D₂) aufweist.

4. Fassung nach den Ansprüchen 2 und 3, **dadurch gekennzeichnet, daß** die zweite Richtung quer zur ersten Richtung (D₁) verläuft.

5. Fassung nach irgendeinem der Ansprüche 3 und 4, **dadurch gekennzeichnet, daß** ein jeder der Endabschnitte (23', 23") der eine Aufnahme bildenden Mittel (22) ferner - näher der Öffnung (22', 22") - eine dritte Einschnürung (31₂) umfaßt, die eine verringerte Abmessung (D₃₁₂) in der zweiten Richtung (D₂) aufweist.

6. Fassung nach irgendeinem der vorhergehenden Ansprüche, **dadurch gekennzeichnet, daß** ein jeder der Endabschnitte (23', 23") der eine Aufnahme bildenden Mittel (22) ferner eine vierte Einschnürung (31₁) umfaßt, die analog zur ersten Einschnürung (30₁) ist, die sich jedoch näher der Öffnung (22', 22") befindet.

7. Fassung nach irgendeinem der vorhergehenden Ansprüche, **dadurch gekennzeichnet, daß** die eine Aufnahme bildenden Mittel (122, 132) eine Röhre (122) und zwei Hülsen (132) umfassen, die an dem ersten bzw. zweiten Endabschnitt (123', 123") der eine Aufnahme bildenden Mittel (122, 132) in die genannte Röhre (122) eingeführt sind.

8. Fassung nach dem vorhergehenden Anspruch, **dadurch gekennzeichnet, daß** für einen jeden der Endabschnitte (123', 123") der Röhre (122) die erste Einschnürung (130₁) von einem Teil der Hülse (132) gebildet ist, der in den betrachteten Endabschnitt (123', 123") eingeführt ist.

9. Fassung nach dem vorhergehenden Anspruch, **dadurch gekennzeichnet, daß** das zum Inneren der Röhre (122) gewandte Ende (132A) jeder Hülse (132) wenigstens eine Nut (140₁, 140₂) aufweist, in die der Halteansatz (27) des Bügels (12, 14), der mit der betrachteten Hülse (132) zusammenwirkt, eingefügt werden kann.

10. Fassung nach dem vorhergehenden Anspruch, **dadurch gekennzeichnet, daß** das innerhalb der Röhre (122) befindliche Ende (132A) jeder Hülse (132) zwei Nuten (140₁, 140₂) aufweist, in wenigstens eine dieser der Halteansatz (27) des Bügels (12,14), der mit der betrachteten Hülse (132) zusammenwirkt, eingefügt werden kann.

11. Fassung nach den Ansprüchen 2 und 7 sowie nach irgendeinem der Ansprüche 2 bis 10, **dadurch gekennzeichnet, daß** für einen jeden der Endabschnitte (123', 123") der eine Aufnahme bildenden Mittel (122, 132) die zweite Einschnürung (130₂) von einem Teil der Hülse (132) gebildet ist.

12. Fassung nach irgendeinem der vorhergehenden Ansprüche, **dadurch gekennzeichnet, daß** sie ferner zwei Kappen (134) umfaßt, die jeweils einen der Endabschnitte (123', 123") der eine Aufnahme bildenden Mittel (122, 132) bedecken und die von dem jeweiligen Bügel (12, 14) durchgriffen werden.

13. Fassung nach irgendeinem der Ansprüche 1 bis 6, **dadurch gekennzeichnet, daß** die eine Aufnahme bildenden Mittel (22) von einer einzigen Röhre (22) gebildet sind und daß jede Einschnürung (30₁, 30₂, 31₁, 31₂) an der ein einziges Teil bildenden Röhre (22) ausgebildet ist.

14. Fassung nach irgendeinem der vorhergehenden Ansprüche, **dadurch gekennzeichnet, daß** jeder Bügel (12, 14) einen quaderförmigen Querschnitt (S₁₂) aufweist, dessen Seiten (25A, 25B, 25C, 25D) sich entlang der ersten und zweiten Richtung (D₁, D₂) erstrecken, so daß sich keiner der Bügel (12, 14) in den eine Aufnahme bildenden Mitteln (22; 122, 132) drehen kann.

15. Fassung nach irgendeinem der vorhergehenden Ansprüche, **dadurch gekennzeichnet, daß** der Bügelkörper (12A, 14A) und der erste Bügelendabschnitt (12B, 14B) ein einziges Teil bilden.

16. Fassung nach irgendeinem der vorhergehenden Ansprüche, **dadurch gekennzeichnet, daß** die genannte Abwinklung (12F, 14F) einen Krümmungsradius (R) in der Größenordnung von 15 mm aufweist.

17. Fassung nach irgendeinem der vorhergehenden Ansprüche, **dadurch gekennzeichnet, daß** jeder Bügel (12, 14) wärmebehandelt ist.

18. Fassung nach irgendeinem der vorhergehenden Ansprüche, **dadurch gekennzeichnet, daß** der flexible Bereich (12E, 14E) einen wärmebehandelten lokalen Bereich (12E, 14E) aufweist.

19. Fassung nach irgendeinem der vorhergehenden Ansprüche, **dadurch gekennzeichnet, daß** der flexible Bereich (12E, 14E) ferner einen verringerten Querschnitt (12E, 14E) gegenüber dem durchgehenden Teil (12D, 14D) des Bügelkörpers (12A, 14A) aufweist.

20. Fassung nach Anspruch 19, **dadurch gekennzeichnet, daß** der verringerte Querschnitt (12E, 14E) des Bügelkörpers (12A, 14A) durch Streckziehen erhalten wird.

21. Fassung nach Anspruch 19, **dadurch gekennzeichnet, daß** der verringerte Querschnitt (12E, 14E) des Bügelkörpers (12A, 14A) durch maschinelle Bearbeitung erhalten wird.
